## Europäisches Patentamt
## European Patent Office
## Office européen des brevets

(11) Veröffentlichungsnummer: **0 049 782**
**B1**

(12) # EUROPÄISCHE PATENTSCHRIFT

(45) Veröffentlichungstag der Patentschrift:
**31.07.85**

(51) Int. Cl.⁴: **B 01 D 53/04,** B 01 J 20/34

(21) Anmeldenummer: **81107444.2**

(22) Anmeldetag: **19.09.81**

(54) Verfahren zur zyklischen Desorption von zyklisch mit Adsorbaten beladenen Adsorptionsmitteln.

(30) Priorität: **14.10.80 DE 3038715**

(43) Veröffentlichungstag der Anmeldung:
**21.04.82 Patentblatt 82/16**

(45) Bekanntmachung des Hinweises auf die Patenterteilung:
**31.07.85 Patentblatt 85/31**

(84) Benannte Vertragsstaaten:
**AT FR GB**

(56) Entgegenhaltungen:
**DE - A - 2 556 388**
**FR - A - 1 306 110**
**GB - A - 2 013 519**

(73) Patentinhaber: **Bergwerksverband GmbH,**
**Franz-Fischer-Weg 61, D-4300 Essen 13 (DE)**

(72) Erfinder: **Gappa, Günther, Ing.grad.,**
**Weskampstrasse 17, D-4660 Gelsenkirchen-Buer (DE)**
Erfinder: **Rogge, Karl, Albert-Schweitzer-Strasse 7,**
**D-6301 Leihgestern (DE)**

## Beschreibung

Die Erfindung betrifft ein Verfahren gemäß dem Oberbegriff von Patentanspruch 1. Ein solches Verfahren ist aus der DE-A-2 901 894 bekannt.

Durch die Anforderungen des Umweltschutzes an die Reinhaltung der Luft oder des Wassers wird es in Zukunft immer wichtiger werden, daß auch Abluft- oder Abwasserströme mit niedriger Konzentration an beispielsweise Lösungsmitteln oder Lösungsmitteldämpfen oder anderen gasförmigen bzw. flüssigen Schadstoffen, wie z. B. Stickstoffoxiden, Phenolen u. ä. (Adsorbate), von diesen Beimengungen befreit werden. Gleiches gilt für die Entfernung von Kohlenwasserstoffen aus Naturgasen, z. B. Erdgas oder Erdölgas, sowie auch für die Reinigung von technischen Gasen, wie beispielsweise Synthesegas.

In der Regel erfolgt die Gewinnung oder Wiedergewinnung dieser Beimengungen (Adsorbate) in einer im Wechsel zwischen Adsorption und Desorption an Aktivkohlen betriebenen Reinigungsanlage mit einem oder, entsprechend geschalteten, mehreren Reaktoren. Der aufwendigste Schritt hierbei ist die Desorption der Adsorbate mittels eines Dampfes (Desorptionsdampf) — in der Regel Wasserdampf oder Stickstoff.

Anlagen zur Wiedergewinnung von solchen Adsorbaten, wie z. B. Lösungsmitteln mit im Festbett angeordneter Aktivkohle, bestehen, um den Lösungsmitteldampf im Wechsel zwischen Adsorption und Desorption ununterbrochen aus der Gasphase entfernen zu können, aus mindestens zwei Reaktoren, die abwechselnd für die Adsorption und die Desorption geschaltet werden. Die Ausmaße der Reaktoren werden in der Regel nach den bei der Adsorption auftretenden Anforderungen bemessen, wobei der Volumenstrom der zu reinigenden Gasphase den Querschnitt der Reaktoren bestimmt. Da der Volumenstrom des zur Desorption verwendeten Desorptionsdampfes sehr viel kleiner als der Volumenstrom der behandelten Gasphase ist, beträgt die Dampfgeschwindigkeit während der Desorption im Aktivkohlebett nur wenige cm/s.

Für die auf die Desorption in der Regel folgende Trocknung und Kühlung des Adsorptionsmittels (bei Adsorption aus der Gasphase) sind die Hydrophobie des verwendeten Adsorptionsmittels, die physikalischen Eigenschaften der Adsorbate und die Anforderungen des Einzelfalles bestimmend. In der Regel erfolgt die Trocknung und Kühlung des desorbierten Adsorptionsmittels mit Frischluft, die mittels eines Gebläses über Wärmetauscher im Kreislauf geführt wird. Außerdem ist es bei einer Luftkühlung möglich, diese nach dem Austritt aus dem zu kühlenden Reaktor in die Atmosphäre abzulassen. Auch Inertgas wird, anstelle von Luft, als Kühlmittel verwendet.

Beim zeitlichen Ablauf stehen sich in Anlagen mit einem Trocknungs- und Kühlkreislauf die Adsorptionszeit und die Regenerationszeit gegenüber, wobei die Regenerationszeit die Zeiten zum Desorbieren, Trocknen und Kühlen umfaßt.

Der Verlauf der bisher üblichen Desorption beladener Aktivkohle, z. B. nur mit Wasserdampf, beginnt in einem — etwas verzögerten — Anfall (neben möglicherweise überströmendem Wasserdampf) von Kondensat, das anfangs fast nur aus dem desorbierten Adsorbat besteht, später aber auch aus Wasser. Danach tritt nur noch ein Gemisch aus Adsorbat-Dampf und Wasserdampf aus dem Reaktor aus, wobei sich etwa in der Mitte der üblichen Desorptionszeit ein Verhältnis von Adsorbat-Dampf zu Wasserdampf von 1 : 1 einstellt, das in der zweiten Hälfte der Desorptionszeit bis auf ein Verhältnis von etwa 1 : 10 ansteigt. Dies bedeutet, daß zu diesem Zeitpunkt zur Desorption von 1 kg Adsorbat 10 kg Wasserdampf benötigt werden. Damit ist der Dampfverbrauch so hoch, daß keine wirtschaftliche Desorption mehr vorliegt.

Es ist weiter ein Desorptionsverfahren bekannt, bei dem die Desorption in zwei Phasen, und zwar in einer Vorwärme- und einer Ausdämpfphase durchgeführt wird, wobei über das Adsorptionsmittel destillatenthaltende Dämpfegemische geleitet werden. Hierbei wird das Dampfdestillat der zweiten Desorptionsphase eines Adsorbers in der ersten Desorptionsphase eines anderen Adsorbers eingesetzt, wenn eine vorgegebene Lösungsmittelkonzentration im Dampfdestillat vorhanden ist.

Die bekannten Desorptionsverfahren sind somit mit beträchtlichen Mängeln behaftet. Die wechselnde Benutzung des oder der Reaktoren zum Adsorbieren und Desorbieren führt, wegen der Bemessung der Reaktorgröße nach den bei der Adsorption auftretenden Anforderungen, bei der Desorption zu sehr kleinen Dampfgeschwindigkeiten. Eine gleichmäßige Beaufschlagung des Aktivkohlefestbettes mit Wasserdampf ist daher in Frage gestellt, besonders dann, wenn bei verhältnismäßig großen Reaktorquerschnitten mit im Verhältnis dazu geringer Schichthöhen gearbeitet wird. Außerdem führt das Erfordernis der Anwendung einer wirtschaftlich zu vertretenden Dampfmenge zu einer Begrenzung der Desorption auf eine erhöhte Restbeladung und damit zu einer verminderten Beladungsfähigkeit im nächsten Zyklus und folglich zu einer verminderten Nutzung der Adsorptionsfähigkeit der im Reaktor befindlichen Aktivkohle.

Der Erfindung liegt demnach die Aufgabe zugrunde, bei einem Verfahren der eingangs genannten Art mit einer möglichst geringen Menge an Desorptionsdampf die Desorption der Adsorbate zu verbessern und die Kondensationsenergie des Desorptionsdampfes möglichst weitgehend zu nutzen.

Diese Aufgabe wird erfindungsgemäß durch die kennzeichnenden Merkmale des Anspruches 1 gelöst.

Weiterbildungen und bevorzugte Ausführungsformen der Erfindung ergeben sich aus den Unteransprüchen.

Durch die Verwendung des in der zweiten Desorptionsphase anfallenden Dämpfegemisches als das in der ersten Desorptionsphase über das Adsorptionsmittel zu leitende Dämpfegemisch wird der Wasserdampfverbrauch bei praktisch gleich gutem und intensiven Verlauf der Desorption verringert und die Kondensationsenergie des zum Ende des Desorptionsschrittes anfallenden Dämpfegemisches wird nutzbringend in den Desorptionsprozeß wieder eingebracht.

Sofern ein einziger, mit Adsorptionsmittel gefüllter Adsorptions/Desorptions-Reaktor verwendet wird, muß das in der zweiten Desorptionsphase anfallende Dämpfegemisch für den Einsatz in der ersten Desorptionsphase des nächsten Desorptionszyklus zwischengespeichert werden. Die Temperatur-, Druck- und Strömungsbedingungen des in der ersten Desorptionsphase zu verwendenden Dämpfegemisches unterscheiden sich in der Regel nur unwesentlich von den entsprechenden, nach dem Stand der Technik verwendeten Mengen an z. B. Wasserdampf.

Die Kondensationsenergie des in der ersten Desorptionsphase als Kondensat anfallenden Dämpfegemisches bewirkt eine Temperaturerhöhung des Adsorptionsmittels, die sich so lange fortsetzt, bis die Kondensationstemperatur überschritten ist. Die einzusetzende Menge an reinem Desorptionsdampf (zweite Desorptionsphase) ist daher besonders gering, wenn man gemäß den Merkmalen von Patentanspruch 1 vorgeht.

Durch die Verwendung von mindestens drei mit Adsorptionsmittel gefüllten Adsorptions/Desorptionsreaktoren (Reaktoren) wird nicht nur eine kontinuierliche Betriebsweise erreicht, sondern auch ein Zeit- und Wärmegewinn erzielt, da die ansonsten aufwendige Zwischenspeicherung des in der zweiten Desorptionsstufe anfallenden Dämpfegemisches vermieden wird.

Die ein- oder mehrmalige Unterbrechung einer der beiden oder beider Desorptionsphasen gemäß Patentanspruch 1 ermöglicht eine weitere Verminderung des Desorptionsdampfverbrauchs. Während der Unterbrechungen verbleibt der in den Reaktor eingeleitete Desorptionsdampf bzw. das eingeleitete Dämpfegemisch solange im Adsorptionsmittelfestbett, bis sich eine Anreicherung des Adsorbates im Wasserdampf eingestellt hat, worauf der in Intervallen eingeleitete Wasserdampf bzw. das eingeleitete Dämpfegemisch ein ausreichendes Konzentrationsgefälle wieder herstellt. Es wurde nämlich gefunden, daß ein Konzentrationsgefälle von ausreichendem Ausmaß erforderlich ist, um nicht nur das desorbierte Adsorbat aus dem Adsorptionsmittelbett auszutragen und aus dem Reaktor zu transportieren, sondern auch aus den Poren des Adsorptionsmittels in den es umgebenden Raum zu schaffen.

– Es versteht sich, daß die vorgenannte Maßnahme an sich auch dann vorgenommen werden kann, wenn die Desorption, wie nach dem Stand der Technik üblich, in einer einzigen Phase durchgeführt wird.

Das erfindungsgemäße Verfahren kann an sich an den unterschiedlichsten Adsorptionsmitteln, also auch an Molekularsieben, Zeolithen und ähnlichen, durchgeführt werden, doch hat es sich als besonders vorteilhaft herausgestellt, wenn — vor allem in Zusammenhang mit der Lösungsmittelrückgewinnung — Aktivkohle als Adsorptionsmittel eingesetzt wird.

Im Verlauf einer Desorption verändert sich das Verhältnis von Adsorbat zu Desorptionsdampf in Richtung auf ein an Adsorbat verarmtes Dämpfegemisch, während der Wärmeinhalt des Dämpfegemisches sich in Richtung auf den Wärmeinhalt des reinen Desorptionsdampfes verändert. Die zweite Desorptionsphase beginnt deshalb vorteilhafterweise während der zweiten Hälfte, vorzugsweise während des letzten Drittels der gesamten Desorptionszeit, und zwar immer mit der Umschaltung eines weiteren Reaktors vom Adsorptions- auf Desorptionsbetrieb.

Sowohl für eine besonders energiesparende Rückgewinnung von Adsorbaten, als auch für die Intensivierung der Desorption hat sich die Vorgehensweise nach Patentanspruch 2 als besonders vorteilhaft erwiesen; außerdem erleichtert diese Vorgehensweise ein besonders zeitgünstiges Zusammenschalten von beispielsweise mehr als zwei mit Adsorptionsmittel gefüllten Adsorptions/Desorptions-Reaktoren.

Weitere Ziele, Merkmale, Vorteile und Anwendungsmöglichkeiten der vorliegenden Erfindung ergeben sich aus der nachfolgenden Beschreibung eines Ausführungsbeispieles anhand der Zeichnungen. Es zeigt

Fig. 1 eine schematische Schaltung einer Adsorptions/Desorptions-Anlage mit drei Adsorptions-Reaktoren für die Wiedergewinnung eines Lösungsmittels aus Abluft;

Fig. 2 eine graphische Darstellung eines Schaltschemas mit Unterbrechung des Desorptionsschrittes für die Anlage gemäß Fig. 1.

Soweit in der folgenden Beschreibung nichts anderes gesagt wird, sind die Ventile geschlossen.

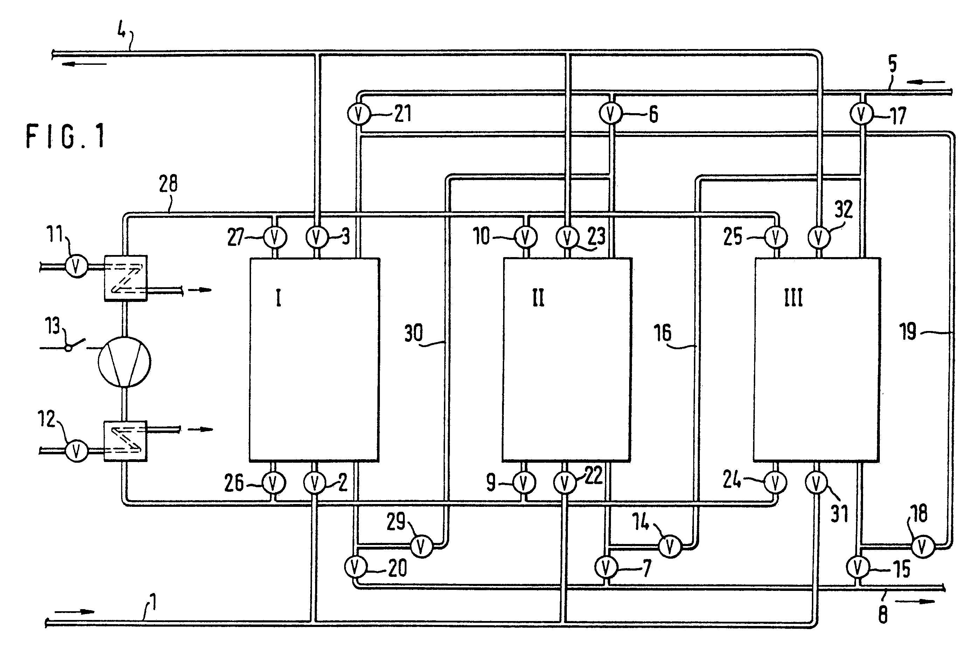

Gemäß Fig. 1 strömt z. B. mit Lösungsmitteldampf beladene Abluft durch Leitung 1 bei geöffneten Ventilen 2 und 3 durch den ein Adsorptionsmittelfestbett enthaltenden Reaktor I und verläßt durch die Leitung 4 die Anlage. Gleichzeitig befindet sich der mit dem gleichen Adsorptionsmittel wie Reaktor I gefüllte Reaktor II in der zweiten Desorptionsphase, in der Wasserdampf durch Leitung 5 bei geöffneten Ventilen 6 und 14 in den Reaktor II einströmt, den er als Dämpfegemisch von z. B. Wasserdampf und Lösungsmitteldampf durch die Leitung 16 verläßt. In der gleichen Zeitfolge wird im in gleicher Weise wie die Reaktoren I und II gefüllten Reaktor III das Dämpfegemisch aus dem Reaktor II zur Desorption über die Aktivkohle geleitet, worauf kondensiertes, wiedergewonnenes Lösungsmittel und Dämpfegemisch durch das geöffnete Ventil 15 die Anlage durch Leitung 8 verlassen.

In der zweiten Hälfte der Adsorptionsphase im Reaktor I wird gleichzeitig im Reaktor II bei geöffneten Ventilen 9 und 10 sowie geöffnetem Kühlwasserventil 11 und geöffnetem Heißdampfventil 12 durch das mit Schalter 13 in Betrieb gesetzte Gebläse mit im Kreislauf geführter Luft das desorbierte Adsorptionsmittelfestbett zunächst getrocknet und, nach Schließen des Ventiles 12, anschließend gekühlt. Während eines Teils dieser Zeit kann auch neben einer Unterbrechung der Desorption im Reaktor III eine Zwischendesorptionsphase mit Wasserdampf bei geöffneten Ventilen 17 und 15 verlaufen.

Anschließend erfolgt die erste Desorptionsphase im Reaktor I, in dem bei geöffnetem Ventil 18 Dämpfegemisch aus dem Reaktor III (mit reinem Desorptionsdampf durchspült bei geöffneten Ventilen 17 und 15) durch die Leitung 19 zur Desorption der Aktivkohle in den Reaktor I geführt wird, wobei Lösungsmittel-Kondensat bei geöffnetem Ventil 20 die Anlage durch Leitung 8 verläßt; in dieser Zeit ist Reaktor II auf Adsorption geschaltet. Danach erfolgt im Reaktor I bei geöffneten Ventilen 21 und 20 eine Unterbrechung der Desorption neben einer weiteren Desorption mit reinem Desorptionsdampf (Zwischendesorptionsphase), während Reaktor III getrocknet und gekühlt wird, indem das Trocknen und Kühlen bei geöffneten Ventilen 24 und 25, wie vorstehend beim Reaktor II beschrieben, verläuft. In der gleichen Zeitfolge erfolgt im Reaktor II weiterhin die Adsorption z. B. des Lösungsmittels aus der Abluft bei geöffneten Ventilen 22 und 23.

Schließlich erfolgt im Reaktor I die zweite Desorptionsphase bei geöffneten Ventilen 21 und 29; dabei wird über Leitung 30 Dämpfegemisch zur Desorption in den Reaktor II übergeführt, den es, zusammen mit Kondensat, bei geöffnetem Ventil 7 über Leitung 8 verläßt. Anschließend wird das Adsorptionsmittel des Reaktors I bei geöffneten Ventilen 26 und 27 mit im Kreislauf durch Leitung 28 geführter Luft getrocknet und darauf gekühlt, wie vorstehend bei Reaktor II beschrieben, während im Reaktor II die Desorption mit Desorptionsdampf bei geöffneten Ventilen 6 und 7 abläuft.

Während der beiden letztgenannten Zeiträume verläuft im Reaktor III bei geöffneten Ventilen 31 und 32 der Adsorptionsschritt.

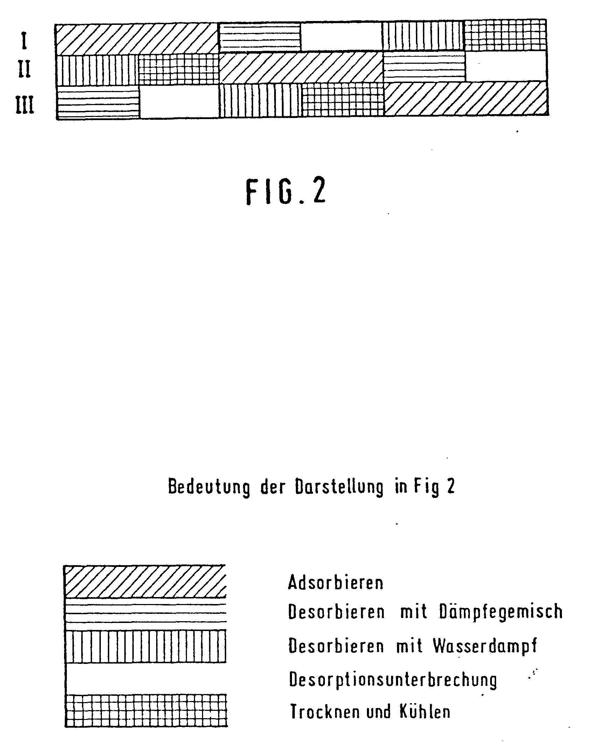

Fig. 2 zeigt die Kombination der Hintereinanderschaltung im Desorptionsweg mit der Unterbrechung der Desorption. Bei dieser Arbeitsweise sind während der Durchströmung mit Wasserdampf, jeweils unmittelbar mit der Desorption beginnend, zwei Reaktoren hintereinandergeschaltet.

Gemäß Fig. 2 ist der Ablauf einer Desorption mit Unterbrechungen und Hintereinanderschaltung im Desorptionsweg graphisch dargestellt. Die Betrachtung der Desorption des Reaktors I (in Fig. 2 durch das stark umrahmte Feld hervorgehoben) zeigt die Merkmale der Hintereinanderschaltung und der Unterbrechung und läßt die besonderen Vorteile dieser Arbeitsweise erkennen. Nach der in Fig. 2 dargestellten Arbeitsweise wird nur in der zweiten Desorptionsphase frischer Desorptionsdampf in den Reaktor I eingeleitet und ein bereits stark an Lösungsmittel verarmtes Dämpfegemisch aus dem Reaktor I dem im Desorptionsweg nachgeschalteten Reaktor II zugeführt (für die dortige erste Desorptionsphase). Bei dieser Arbeitsweise beträgt in der beschriebenen Anlage mit drei Reaktoren bei der Wiedergewinnung von Toluol der spezifische Dampfverbrauch 2,4 kg/kg Lösungsmittel.

Beispiel

Bei der bekannten Wiedergewinnung von Toluol aus 7.200 m³ Abluft/h mit einer Toluolkonzentration von 10 g/m³ in einer Anlage mit drei Reaktoren mit 2 m² Anströmfläche pro Reaktor beträgt der spezifische Dampfverbrauch 3,5 kg/kg Toluol. Durch die in Fig. 2 graphisch dargestellte — erfindungsgemäße, Hintereinanderschaltung von zwei Reaktoren im Desorptionsweg kann das Lösungsmittel mit weniger Dampf desorbiert werden, so daß der spezifische Dampfverbrauch auf 2,8 kg/kg Lösungsmittel gesenkt wird.

**Patentansprüche**

1. Verfahren zur zyklischen Desorption von zyklisch mit Adsorbaten beladenen Adsorptionsmitteln mittels eines Dampfes (Desorptionsdampfes) in zwei Phasen, wobei in der ersten Desorptionsphase ein Gemisch aus Desorptionsdampf und Adsorbatdampf (Dämpfegemisch) und in der zweiten Desorptionsphase reiner Desorptionsdampf über das Adsorptionsmittel geleitet sowie das bei der zweiten Desorptionsphase anfallende Dämpfegemisch für die erste Desorptionsphase eingesetzt wird, wobei die zweite Desorptionsphase frühestens dann beginnt, wenn bei der ersten Desorptionsphase kein Kondensat mehr anfällt, dadurch gekennzeichnet, daß während beider Desorptionsphasen mindestens zwei Reaktoren ununterbrochen im Desorptionsweg hintereinandergeschaltet sind und der Durchfluß des Dämpfegemisches und/oder des Desorptionsdampfes durch die Reaktoren mindestens einmal unterbrochen wird.

2. Verfahren nach Anspruch 1, dadurch gekennzeichnet, daß eine oder mehrere weitere Desorptionsphasen (Zwischendesorptionsphasen) zwischen der ersten und zweiten Desorptionsphase eingeschoben werden.

3. Verfahren nach Anspruch 1 und 2, dadurch gekennzeichnet, daß das Adsorptionsmittel nach dem Abschluß der zweiten Desorptionsphase getrocknet wird.

4. Verfahren nach Anspruch 1 bis 3, dadurch gekennzeichnet, daß das Adsorptionsmittel vor einem erneuten Adsorptionsschritt gekühlt wird.

## Claims

1. Process for the cyclical desorption of adsorbents means cyclically charged with adsorbates by means of a vapour (desorption vapour) in two phases, a mixture of desorption vapour and adsorbate vapour (vapour mixture) in the first phase and pure desorption vapour in the second desorption phase being passed over the adsorbent and the vapour mixture produced during the second desorption phase being used for the first desorption phase, the second desorption phase only beginning when no more condensate is produced in the first desorption phase, characterised in that, during both desorption phases at least two reactors are continuously connected in series in the desorption path and the flow of the vapour mixture and/or the desorption vapour through the reactors is interrupted at least once.

2. Process according to claim 1, characterised in that one or more further desorption phases (intermediate desorption phases) are interposed between the first and second desorption phase.

3. Process according to claims 1 and 2, characterised in that the adsorbent is dried after the second desorption phase has been completed.

4. Process according to claims 1 to 3, characterised in that the adsorbent is cooled before a renewed adsorption step.

## Revendications

1. Procédé de désorption cyclique d'adsorbants chargés de manière cyclique d'adsorbats en deux phases à l'aide d'une vapeur (vapeur de désorption), dans lequel on fait passer sur l'adsorbant, dans la première phase de désorption, un mélange de vapeur de désorption et de vapeur d'adsorbat (mélange de vapeurs), et dans la deuxième phase de désorption de la vapeur de désorption pure, le mélange de vapeurs obtenu dans la deuxième phase de désorption étant utilisé dans la première phase de désorption, la deuxième phase de désorption débutant au plus tôt au moment où la première phase de désorption ne produit plus de condensat, caractérisé en ce que, pendant les deux phases de désorption, au moins deux réacteurs sont en permanence couplés en série pour l'opération de désorption et le passage du mélange de vapeurs et(ou) de la vapeur de désorption à travers les réacteurs est interrompu au moins une fois.

2. Procédé suivant la revendication 1, caractérisé en ce qu'une ou plusieurs phases de désorption supplémentaires (phases de désorption intermédiaires) sont intercalées entre la première et la deuxième phase de désorption.

3. Procédé suivant les revendications 1 et 2, caractérisé en ce que l'adsorbant est séché à la fin de la deuxième phase de désorption.

4. Procédé suivant les revendications 1 à 3, caractérisé en ce que l'adsorbant est refroidi avant toute opération d'adsorption subséquente.

FIG. 1

I
II
III

# FIG.2

Bedeutung der Darstellung in Fig 2

Adsorbieren

Desorbieren mit Dämpfegemisch

Desorbieren mit Wasserdampf

Desorptionsunterbrechung

Trocknen und Kühlen